# EUROPÄISCHE PATENTSCHRIFT

(11) **EP 2 391 563 B1**
(45) Veröffentlichungstag und Bekanntmachung des Hinweises auf die Patenterteilung: **17.04.2013**
(21) Anmeldenummer: 09796668.3
(22) Anmeldetag: 11.12.2009
(51) Int. Cl.: B65G 47/82, B65G 47/84, B07C 5/36

(54) **TRANSPORTVORRICHTUNG ZUR FÖRDERUNG VON GÜTERN**
TRANSPORT APPARATUS FOR CONVEYING GOODS
DISPOSITIF DE TRANSPORT DESTINÉ À TRANSPORTER DES PRODUITS

(30) Priorität: 30.01.2009 DE 102009000496
(43) Veröffentlichungstag der Anmeldung: 07.12.2011
(73) Patentinhaber: Robert Bosch GmbH, 70442 Stuttgart (DE)
(72) Erfinder: MAYER, Ulrich, 74564 Crailsheim (DE)
(86) Internationale Anmeldenummer: PCT/EP2009/066901
(87) Internationale Veröffentlichungsnummer: WO 2010/086062

(56) Entgegenhaltungen:
- EP-A2- 0 635 315
- US-A- 3 710 937

## Beschreibung

### Stand der Technik

Die vorliegende Erfindung betrifft eine Transportvorrichtung zur Förderung von Gütern nach dem Oberbegriff des Anspruch 1, welche insbesondere ein Transportrad (Transportstern) aufweist.

Transportvorrichtungen mit einem Transportrad sind aus dem Stand der Technik in unterschiedlichen Ausgestaltungen bekannt. Derartige Transportvorrichtungen werden beispielsweise in automatisierten Förderanlagen verwendet, wobei an ihrem Umfang eine Vielzahl von Gütern, z.B. Vials, Ampullen, Fläschchen usw., transportiert werden. Derartige Transportvorrichtungen in automatisierten Förderanlagen können an unterschiedlichen Stellen, beispielsweise bei der Übergabe der Güter oder beim Durchführen eines Füllvorgangs eingesetzt werden. Um zu verhindern, dass beschädigte bzw. nicht vollständig gefüllte Güter weitertransportiert werden, ist es notwendig, dass Überprüfungseinrichtungen vorgesehen werden und im Falle eines Erkennens eines nicht geeigneten Gutes dieses entfernt wird. Hierbei wurde schon vorgeschlagen, einen Transportstern mit einer Vielzahl von pneumatischen Ausschubzylindern für jede Objektaufnahme des Transportsterns vorzusehen, um zu ermöglichen, dass ein als Ausschuss erkanntes Gut entfernt wird. Dies führt jedoch zu einem hohen maschinentechnischen Aufwand, so dass diese bekannte Lösung sehr aufwendig und teuer ist. Auch ist es bekannt, paarweise Vakuumräder vorzusehen, welche nach Erkennen eines Ausschussgutes das in der Objektaufnahme angeordnete Ausschussgut ansaugen und einem Schlechtausschub übergeben. Derartige Vakuumräder sind jedoch sehr anfällig gegenüber Verschmutzungen oder einem Glasbruch des Gutes, was insbesondere zu Beschädigungen eines Saugers bzw. einer Verstopfung der Vakuumleitung führen kann. Insbesondere in der Pharmaindustrie bei der Verarbeitung von Medikamenten oder toxischen Produkten kann dies zu erheblichen Problemen führen.

Die EP 0635315 A2 offenbart eine Transporteinrichtung zur Förderung von Gütern gemäß dem Oberbegriff des Anspruch 1.

Die US 3710937 A beschreibt eine Transporteinrichtung zur Förderung von Gütern mit einem Sternrad, einem dazugehörigen Einlaufbereich und Auslaufbereich, wobei sich ein Ausstoß-Aktuator für Ausschussteile im Auslaufbereich der Transporteinrichtung befindet.

### Offenbarung der Erfindung

Die erfindungsgemäße Transportvorrichtung mit den Merkmalen des Anspruchs 1 weist demgegenüber den Vorteil auf, dass sie kompakt und kostengünstig herstellbar ist und eine sehr hohe Robustheit gegenüber Verschmutzungen oder Beschädigungen aufweist. Ferner muss bei der erfindungsgemäßen Transportvorrichtung nur ein einzelnes Transportrad verwendet werden und auf eine aufwendige Vakuumversorgung verzichtet werden. Dies wird erfindungsgemäß dadurch erreicht, dass die Transporteinrichtung neben dem einen Transportrad, an dem ein Einlaufbereich und ein Auslaufbereich vorgesehen ist, eine Überprüfungseinrichtung zur Güterüberprüfung, einen Schlechtauslauf zum Abführen von Ausschussgütern und einen Ausschubfinger umfasst. Der Ausschubfinger schiebt die Ausschussgüter in den Schlechtauslauf aus, wenn eine mit der Überprüfungseinrichtung verbundene Steuervorrichtung den Ausschubfinger entsprechend betätigt. Der Schlechtauslauf ist dabei, in Umfangsrichtung des Transportrades gesehen, zwischen dem Einlaufbereich und dem Auslaufbereich angeordnet. Da erfindungsgemäß der als Gutauslauf dienende Auslaufbereich und der Schlechtauslauf getrennt sind, kann durch die Verwendung eines Ausschubelements eine kompakte und einfach aufgebaute Ausschubvorrichtung bereitgestellt werden.

Die Unteransprüche zeigen bevorzugte Weiterbildungen der Erfindung.

Vorzugsweise ist das Ausschubelement ein Ausschubfinger. Hierdurch ist es möglich, dass der Ausschubfinger derart am Transportrad angeordnet wird, dass er in Radialrichtung hinter den Gütern angeordnet ist und diese radial nach außen ausschieben kann. Hierdurch ergibt sich ein besonders schlanker und kompakter Aufbau des Ausschubelements.

Weiter bevorzugt ist der Ausschubfinger drehbar an einer Rotationswelle angeordnet, um den Ausschubvorgang durch eine Drehbewegung auszuführen. Hierdurch kann eine sehr einfache Bewegungskinematik für den Ausschubfinger vorgesehen werden.

Weiter bevorzugt umfasst die Ausschubeinrichtung eine Kurvenscheibe, welche drehbar ist und welche mit einem mit dem Ausschubelement verbundenen Kurvenhebel in Kontakt ist, um das Ausschubelement zu bewegen. Durch die Verwendung der Kurvenscheibe ergibt sich eine sehr einfache und sichere Bewegungsmöglichkeit des Ausschubelements. Ferner kann dadurch ein modularer Aufbau der Ausschubeinrichtung erhalten werden, so dass die Ausschubeinrichtung beispielsweise durch Austausch der Kurvenscheibe für unterschiedliche Transportvorrichtungen verwendet werden kann. Besonders bevorzugt ist die Kurvenscheibe dabei mit einer Hubvorrichtung verbunden, um die Kurvenscheibe in und außer Eingriff mit dem Kurvenhebel zu bringen. Hierdurch kann eine einfache Ansteuerung des Ausschubelements durch eine Hubbewegung der Kurvenscheibe ermöglicht werden.

Gemäß einer weiteren bevorzugten Ausgestaltung der Erfindung ist die Kurvenscheibe über ein Zahnradgetriebe antreibbar. Weiter vorzugsweise ist dabei ein Zahnrad des Zahnradgetriebes derart angeordnet, dass es gemeinsam mit dem Transportrad dreht. Beispielsweise können das Zahnrad und das Transportrad auf einer gemeinsamen Achse, welche angetrieben wird, angeordnet sein. Über die Hubvorrichtung kann dann jeweils ein Ineingriffbringen bzw. Außereingriffbringen mit dem gemeinsam mit dem Transportrad rotierenden Zahnrad erfolgen.

Weiter bevorzugt umfasst die Transportvorrichtung einen Elektromotor, um die Kurvenscheibe anzutreiben. Somit kann durch direkte Ansteuerung des Elektromotors die Kurvenscheibe betätigt werden und dementsprechend ein Schlechtausschub ausgeführt werden.

Gemäß einer weiteren bevorzugten Ausgestaltung der Erfindung umfasst die Transportvorrichtung ferner ein Rückstellelement, um das Ausschubelement nach einer Aktivierung wieder in eine Ausgangsposition zurückzustellen. Dies ermöglicht es, dass keine separate Ansteuerung des Ausschubelements nach einem erfolgten Schlechtausschub notwendig ist, sondern eine Rückstellung einfach durch Freigeben des Rückstellelements ermöglicht wird.

Weiter bevorzugt ist das Transportrad zweiteilig mit einem ersten und zweiten Teilrad ausgebildet, wobei das Ausschubelement zwischen dem ersten und zweiten Teilrad angeordnet ist. Das Transportrad weist somit einen Zwillingsrad-Aufbau auf, wobei die beiden Teilräder fest miteinander verbunden sind. Dementsprechend weisen die beiden Teilräder jeweils an in Umfangsrichtung gleichen Positionen Taschen zur Aufnahme der Güter auf. Hierdurch kann das Ausschubelement sicher und geschützt zwischen den beiden Teilrädern des Transportrads angeordnet sein.

### Zeichnung

Nachfolgend wird unter Bezugnahme auf die begleitende Zeichnung ein bevorzugtes Ausführungsbeispiel der Erfindung im Detail beschrieben. In der Zeichnung ist:

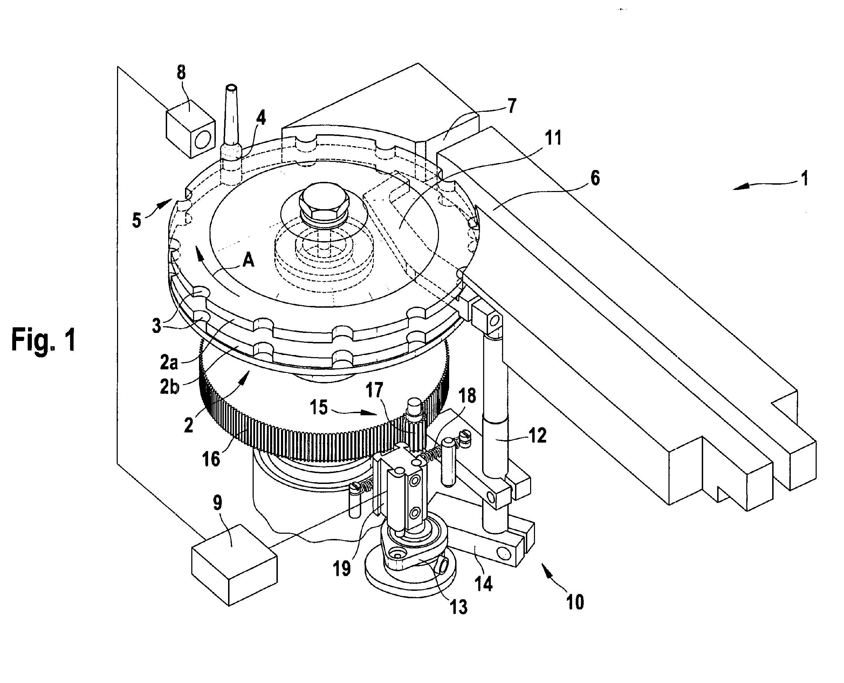

- Figur 1: eine schematische, perspektivische Ansicht einer Transportvorrichtung gemäß einem bevorzugten Ausführungsbeispiel der Erfindung.

### Bevorzugte Ausführungsform der Erfindung

Nachfolgend wird unter Bezugnahme auf Figur 1 eine Transportvorrichtung 1 gemäß einem bevorzugten Ausführungsbeispiel der Erfindung im Detail beschrieben.

Wie aus Figur 1 ersichtlich ist, umfasst die Transporteinrichtung 1 ein Transportrad 2, welches als Zwillingsrad ausgebildet ist und ein erstes Teilrad 2a und ein zweites Teilrad 2b umfasst. In beiden Teilrädern 2a, 2b sind jeweils eine Vielzahl von Taschen 3 ausgebildet, welche in Umfangsrichtung des Transportrads 2 an gleichen Positionen angeordnet sind. Die Taschen 3 dienen dabei zur Aufnahme von Gütern 4. In Figur 1 ist aus Übersichtlichkeitsgründen nur ein Gut 4 eingezeichnet. Beim Transportrad 2 ist ferner ein Einlaufbereich 5, in welchem die Güter zum Transportrad 2 zugeführt werden, und ein Auslaufbereich 6 vorgesehen, an welchem die Güter vom Transportrad 2 abgegeben werden.

Die Transporteinrichtung 1 umfasst ferner eine Überprüfungseinrichtung 8, welche eine Überprüfung der Güter 4 ausführt. Insbesondere werden die Güter hinsichtlich ihrer Füllmenge und/oder auf Beschädigungen hin überprüft. Sollte eines der Güter den Anforderungen nicht genügen, wird es als Ausschussgut erfasst und ein entsprechendes Signal an eine Steuerungseinheit 9 gegeben. Weiterhin umfasst die Transporteinrichtung 1 eine Ausschubeinrichtung 10, welche Ausschussgüter in einen Schlechtauslauf 7 ausschiebt. Hierbei sei angemerkt, dass der Schlechtauslauf 7 in Umfangsrichtung zwischen dem Einlaufbereich 5 und dem Auslaufbereich 6 angeordnet ist. Die Ausschubeinrichtung 10 umfasst ein Ausschubelement 11 in Form eines Ausschubfingers, weicher drehbar um eine Rotationswelle 12 angeordnet ist. Ferner umfasst die Ausschubeinrichtung 10 eine Kurvenscheibe 13 und einen Kurvenhebel 14, welcher an der Rotationswelle 12 fixiert ist. Die Kurvenscheibe 13 befindet sich mit dem Kurvenhebel 14 in Kontakt, um eine Drehung der Rotationswelle 12 und damit eine Drehung des Ausschubelements 11 zu ermöglichen. Die Kurvenscheibe 13 ist mit einer Hubvorrichtung 19 verbunden, welche eine Position der Kurvenscheibe 13 relativ zum Kurvenhebel 14 ändert, so dass in einer ersten Position die Kurvenscheibe 13 den Kurvenhebel 14 kontaktiert und in einer zweiten Position die Kurvenscheibe den Kurvenhebel nicht mehr kontaktiert. Die Kurvenscheibe 13 wird weiterhin über ein Zahnradgetriebe 15 angetrieben. Wie aus Figur 1 ersichtlich ist, umfasst das Zahnradgetriebe ein erstes Zahnrad 16 und ein zweites Zahnrad 17. Hierbei ist das erste Zahnrad 16 mit einem nicht dargestellten Antrieb, welcher auch das Transportrad 2 antreibt, verbunden. Dies kann beispielsweise derart ausgeführt sein, dass das erste Zahnrad 16 auf einer Antriebswelle des Transportrads 2 angeordnet ist und gemeinsam mit dem Transportrad 2 rotiert.

Zur Rückstellung des Ausschubelements 11 ist weiterhin eine Rückstellfeder 18 vorgesehen.

Die Funktion der erfindungsgemäßen Transporteinrichtung 1 ist dabei wie folgt. Güter 4 werden über den Einlaufbereich 5 zum Transportrad 2 zugeführt und durch dieses in Richtung des Pfeils A weiterbewegt. Hierbei befinden sich die Güter in den Taschen 3. Während der Bewegung mit dem Transportrad 2 werden die Güter 4 an der Überprüfungseinrichtung 8 vorbeigeführt. Die Überprüfungseinrichtung 8 ist beispielsweise ein optischer Sensor, welcher eine Füllhöhe der Güter, z.B. Glasampullen oder Fläschchen usw., überprüft. Ferner überprüft die Überprüfungseinrichtung 8, ob Beschädigungen vorliegen. Wenn die Überprüfungseinrichtung 8 keine Füllstandsabweichung und keine Beschädigung aufweist, wird das Gut 4 weiterhin in Richtung des Pfeils A bis zum Auslaufbereich 6 weitertransportiert und dort aus dem Transportrad 2 abgegeben.

Sollte jedoch die Überprüfungseinrichtung 8 eine Beschädigung oder eine Füllstandsabweichung erfasst haben, wird ein entsprechendes Signal an die Steuereinheit 9 abgegeben. Die Steuereinheit 9 ist auch mit der Hubvorrichtung 19 der Ausschubeinrichtung 10 verbunden. Wenn bestimmt wurde, dass ein Gut 4 ein Ausschussgut ist, wird die Ausschubeinrichtung 10 betätigt, indem die Hubvorrichtung 19 abgesenkt wird, so dass die Kurvenscheibe 13 mit dem Kurvenhebel 14 an der Rotationswelle 12 in Kontakt kommt. Diese Position ist in Figur 1 gezeigt. Dadurch wird der Kurvenhebel 14 um die Rotationswelle 12 gedreht und ebenfalls das Ausschubelement um die Rotationswelle 12 gedreht, um das Ausschussgut in den Schlechtauslauf 7 auszuschieben. Somit ist eine mechanische Verbindung zwischen dem Transportrad 2 und dem Anschlusselement 11 hergestellt, welche ohne weitere Überprüfungseinrichtung das Ausschussgut aussortiert. Nach erfolgtem Ausschub des Ausschussgutes betätigt die Steuereinheit 9 wieder die Hubvorrichtung 19, so dass die Kurvenscheibe 13 wieder außer Eingriff vom Kurvenhebel 14 gebracht wird. Hierdurch kann die Rückstellfeder 18 das Ausschubelement 11 wieder in die in Figur 1 gezeigte Ausgangsposition zurückstellen.

Erfindungsgemäß kann somit eine Transporteinrichtung 1 bereitgestellt werden, welche eine sehr hohe Robustheit gegenüber Verschmutzungen und auch gegenüber einem Glasbruch o.ä. der Güter aufweist. Somit weist die erfindungsgemäße Transporteinrichtung 1 eine sehr geringe Ausfallwahrscheinlichkeit auf. Auch kann mittels der erfindungsgemäßen Transporteinrichtung 1 problemlos eine Verarbeitung von toxischen Gütern ermöglicht werden. Weiterhin wird erfindungsgemäß auch keine Druckluft zum Ausschieben eines Ausschussgutes verwendet, so dass insbesondere Aufwirbelung von Partikeln o.ä. vermieden werden kann, was insbesondere im Pharmabereich kritisch sein kann. Dabei weist die Transporteinrichtung 1 gemäß der Erfindung nur einen geringen Platzbedarf auf und es wird nur ein Transportrad mit entsprechenden Kostenvorteilen benötigt.

Die erfindungsgemäße Transporteinrichtung 1 wird vorzugsweise bei Füll-und/oder Verpackungsmaschinen, insbesondere im Pharmabereich, verwendet.

## Patentansprüche

1. Transporteinrichtung zur Förderung von Gütern (4), umfassend:
- ein drehbar gelagertes Transportrad (2), welches an einem Außenumfang eine Vielzahl von Taschen (3) zur Aufnahme der zu befördernden Güter (4) aufweist,
- einen Einlaufbereich (5), in welchem die Güter (4) zum Transportrad (2) zugeführt werden,
- einen Auslaufbereich (6), in welchem die Güter (4) aus dem Transportrad (2) herausgeführt werden,
- eine Überprüfungseinrichtung (8), welche die Güter (4) überprüft, um Ausschussgüter zu identifizieren,
- einen Schlechtauslauf (7), um Ausschussgüter abzuführen,
- eine Ausschubeinrichtung (10) mit einem Ausschubelement (11), um Ausschussgüter in dem Schlechtauslauf (7) auszuschieben, und
- eine Steuerungseinheit (9), welche mit der Überprüfungseinrichtung (8) und der Ausschubeinrichtung (10) verbunden ist, um bei Erfassen eines Ausschussgutes das Ausschubelement (11) zu aktivieren und das Ausschussgut in den Schlechtauslauf (7) auszuschieben, **dadurch gekennzeichnet, dass**
- der Schlechtauslauf (7) in Umfangsrichtung des Transportrades (2) zwischen dem Einlaufbereich (5) und dem Auslaufbereich (6) angeordnet ist.

2. Transporteinrichtung nach Anspruch 1, **dadurch gekennzeichnet, dass** das Ausschubelement (11) ein Ausschubfinger ist.

3. Transporteinrichtung nach einem der vorhergehenden Ansprüche,
**dadurch gekennzeichnet, dass** das Ausschubelement (11) drehbar an einer Rotationswelle (12) angeordnet ist, um den Ausschubvorgang durch eine Drehbewegung auszuführen.

4. Transporteinrichtung nach einem der vorhergehenden Ansprüche,
**dadurch gekennzeichnet, dass** die Ausschubeinrichtung (10) eine Kurvenscheibe (13) umfasst, welche drehbar angeordnet ist und welche mit einem mit dem Ausschubelement (11) verbundenen Kurvenhebel (14) in Kontakt bringbar ist, um das Ausschubelement (11) zu bewegen.

5. Transporteinrichtung nach Anspruch 4, **dadurch gekennzeichnet, dass** die Kurvenscheibe (13) mit einer Hubvorrichtung (19) verbunden ist, um mit dem Kurvenhebel (14) in und außer Eingriff zu kommen.

6. Transporteinrichtung nach Anspruch 4 oder 5, **dadurch gekennzeichnet, dass** die Kurvenscheibe (13) über ein Zahnradgetriebe (15) antreibbar ist.

7. Transporteinrichtung nach Anspruch 6, **dadurch gekennzeichnet, dass** ein Zahnrad (16) des Zahnradgetriebes gemeinsam mit dem Transportrad (2) dreht.

8. Transporteinrichtung nach einem der Ansprüche 3 oder 4, **dadurch gekennzeichnet, dass** die Kurvenscheibe (13) zum Antreiben mit einem Elektromotor verbunden ist.

9. Transporteinrichtung nach einem der vorhergehenden Ansprüche, ferner umfassend ein Rückstellelement (18), um das Ausschubelement (11) nach einer Aktivierung wieder in eine Ausgangsposition zurückzustellen.

10. Transporteinrichtung nach einem der vorhergehenden Ansprüche,
**dadurch gekennzeichnet, dass** das Transportrad (2) zweiteilig mit einem ersten Teilrad (2a) und einem zweiten Teilrad (2b) ausgebildet ist und das Ausschubelement (11) zwischen dem ersten und zweiten Teilrad (2a, 2b) angeordnet ist.

## Claims

1. Transporting device for conveying goods (4), comprising:
- a rotatably mounted transporting wheel (2) which has on an outer circumference a multiplicity of pockets (3) for receiving the goods (4) to be conveyed,
- an inlet region (5) in which the goods (4) are fed to the transporting wheel (2),
- an outlet region (6) in which the goods (4) are guided out of the transporting wheel (2),
- a checking device (8) which checks the goods (4) in order to identify reject goods,
- a reject outlet (7) in order to remove reject goods,
- a pushing-out device (10) having a pushing-out element (11) in order to push reject goods out into the reject outlet (7), and
- a control unit (9) which is connected to the checking device (8) and the pushing-out device (10) in order to activate the pushing-out element (11) when a reject good is detected and to push the reject good out into the reject outlet (7),
**characterized in that**
- the reject outlet (7) is arranged between the inlet region (5) and the outlet region (6) in the circumferential direction of the transporting wheel (2).

2. Transporting device according to Claim 1, **characterized in that** the pushing-out element (11) is a pushing-out finger.

3. Transporting device according to one of the preceding claims, **characterized in that** the pushing-out element (11) is arranged rotatably on a rotation shaft (12) in order to carry out the pushing-out operation by way of a rotary movement.

4. Transporting device according to one of the preceding claims, **characterized in that** the pushing-out device (10) comprises a cam plate (13) which is arranged rotatably and which can be brought into contact with a cam lever (14) connected to the pushing-out element (11), in order to move the pushing-out element (11).

5. Transporting device according to Claim 4, **characterized in that** the cam plate (13) is connected to a lifting apparatus (19) in order to be engaged with and disengaged from the cam lever (14).

6. Transporting device according to Claim 4 or 5, **characterized in that** the cam plate (13) is drivable via a gearwheel mechanism (15).

7. Transporting device according to Claim 6, **characterized in that** a gearwheel (16) of the gearwheel mechanism rotates together with the transporting wheel (2).

8. Transporting device according to either of Claims 3 and 4, **characterized in that** the cam plate (13) is connected for driving to an electric motor.

9. Transporting device according to one of the preceding claims, also comprising a restoring element (18) in order to restore the pushing-out element (11) back into a starting position following activation.

10. Transporting device according to one of the preceding claims, **characterized in that** the transporting wheel (2) is formed in two parts with a first part-wheel (2a) and a second part-wheel (2b), and the pushing-out element (11) is arranged between the first and second part-wheels (2a, 2b).

## Revendications

1. Dispositif de transport destiné à transporter des produits (4), comprenant :
- une roue de transport (2) supportée à rotation, qui présente sur une périphérie extérieure une pluralité de poches (3) pour recevoir les produits (4) à transporter,
- une région d'entrée (5) dans laquelle les produits (4) sont acheminés à la roue de transport (2),
- une région de sortie (6) dans laquelle les produits (4) sont guidés hors de la roue de transport (2),
- un dispositif de contrôle (8) qui contrôle les produits (4) afin d'identifier les produits à mettre au rebut,
- une sortie de rejet (7) pour évacuer les produits à mettre au rebut,
- un dispositif d'évacuation (10) avec un élément d'évacuation (11) pour évacuer les produits à mettre au rebut dans la sortie de rejet (7), et
- une unité de commande (9) qui est connectée au dispositif de contrôle (8) et au dispositif d'évacuation (10), afin d'activer l'élément d'évacuation (11) lors de la détection d'un produit à mettre au rebut, et afin d'évacuer le produit à mettre au rebut dans la sortie de rejet (7),
**caractérisé en ce que**
- la sortie de rejet (7) est disposée dans la direction périphérique de la roue de transport (2) entre la région d'entrée (5) et la région de sortie (6).

2. Dispositif de transport selon la revendication 1, **caractérisé en ce que** l'élément d'évacuation (11) est un doigt d'évacuation.

3. Dispositif de transport selon l'une quelconque des revendications précédentes, **caractérisé en ce que** l'élément d'évacuation (11) est disposé de manière rotative sur un arbre de rotation (12) afin d'effectuer l'opération d'évacuation par un mouvement de rotation.

4. Dispositif de transport selon l'une quelconque des revendications précédentes, **caractérisé en ce que** le dispositif d'évacuation (10) comprend un disque à came (13) qui est disposé à rotation et qui peut être amené en contact avec un levier de came (14) connecté à l'élément d'évacuation (11) pour déplacer l'élément d'évacuation (11).

5. Dispositif de transport selon la revendication 4, **caractérisé en ce que** le disque à came (13) est connecté à un dispositif de levage (19) afin de pouvoir venir en engagement et sortir d'engagement avec le levier de came (14).

6. Dispositif de transport selon la revendication 4 ou 5, **caractérisé en ce que** le disque à came (13) peut être entraîné par le biais d'une transmission à engrenage (15).

7. Dispositif de transport selon la revendication 6, **caractérisé en ce qu'**une roue dentée (16) de la transmission à engrenage tourne conjointement avec la roue de transport (2).

8. Dispositif de transport selon l'une quelconque des revendications 3 ou 4, **caractérisé en ce que** le disque à came (13) est connecté à un moteur électrique en vue de l'entraînement.

9. Dispositif de transport selon l'une quelconque des revendications précédentes, comprenant en outre un élément de rappel (18) afin de ramener l'élément d'évacuation (11) après son activation dans une position de départ.

10. Dispositif de transport selon l'une quelconque des revendications précédentes, **caractérisé en ce que** la roue de transport (2) est réalisée en deux parties avec une première roue partielle (2a) et une deuxième roue partielle (2b), et l'élément d'évacuation (11) est disposé entre la première et la deuxième roue partielle (2a, 2b).
